# EUROPÄISCHE PATENTSCHRIFT

(11) **EP 2 161 552 B1**
(45) Veröffentlichungstag und Bekanntmachung des Hinweises auf die Patenterteilung: **10.11.2010**
(21) Anmeldenummer: 09007589.6
(22) Anmeldetag: 09.06.2009
(51) Int. Cl.: G01F 23/284, H01Q 19/08, H01Q 13/02

(54) **Wellenübergang und Hornantenne**
Waveguide and horn antenna
Guide d'onde et antenne à cornet

(30) Priorität: 08.09.2008 DE 102008046054
(43) Veröffentlichungstag der Anmeldung: 10.03.2010
(73) Patentinhaber: KROHNE MESSTECHNIK GMBH & CO. KG, 47058 Duisburg (DE)
(72) Erfinder: Armbrecht, Gunnar, 30451 Hannover (DE); Denicke, Eckhard, 29690 Gillen (DE); Schieck, Burkhard, 44801 Bochum (DE)
(74) Vertreter: Gesthuysen, Hans Dieter

(56) Entgegenhaltungen:
- WO-A-03/078936
- WO-A-2006/080130
- US-A- 4 633 264
- US-A- 5 117 240
- US-A- 5 323 169

## Beschreibung

Die Erfindung betrifft einen Wellenübergang, insbesondere für Radaranwendungen, zur Führung von elektromagnetischen Wellen von einem Speiseabschnitt geringen Querschnitts zu einem Abstrablabschnitt größeren Querschnitts, mit einer sich von dem Speiseabschnitt auf den Abstrahlabschnitt aufweitenden, die elektromagnetischen Wellen reflektierenden Hülle. Darüber hinaus betrifft die Erfindung auch einen Hornstrahler, insbesondere zur Beaufschlagung eines Schwallrohres mit elektromagnetischen Wellen, mit einem speisenden Wellenleiter geringen Querschnitts und mit einem an den Wellenleiter angeschlossenen Wellenübergang zur Führung der von dem speisenden Wellenleiter stammenden elektromagnetischen Wellen, wobei der Wellenübergang wie vorstehend beschrieben ausgestaltet ist.

Wellenübergärige der zuvor beschriebenen Art sind seit Jahrzehnten bekannt und werden bei solchen technischen Anwendungen benötigt, bei denen elektromagnetische Wellen - beispielsweise zu Meßzwecken - in den umgebenden Raum oder in einen abgegrenzten Teilraum gerichtet emittiert werden sollen, so beispielsweise auch in der industriellen Prozeßüberwachung zur Bestimmung von Abständen über die Laufzeitermittlung von reflektierten elektromagnetischen Wellen (Radaranwendungen). Die hier beschriebene Erfindung ist vollkommen unabhängig von dem Gebiet, in dem der nachfolgend behandelte Wellenübergang zur Anwendung kommt; exemplarisch wird im folgenden auf die Verwendung der in Rede stehenden Wellenübergänge auf dem Gebiet der Füllstandsmeßtechnik Bezug genommen.

Wellenübergänge dienen der geführten Wellenübertragung und Formung elektromagnetischer Wellen, um diese mit gewünschten Eigenschaften von einem Speiseabschnitt geringen Querschnitts auf einen Abstrahlabschnitt größeren Querschnitts zu leiten, so daß die dann abgestrahlten elektromagnetischen Wellen mit einer gewünschten Apertur abgestrahlt werden können. Eine große Apertur bzw. ein Abstrahlabschnitt mit einem großen Querschnitt ist deshalb wünschenswert, weil nur damit eine schmale Richtcharakteristik in Hauptabstrahlrichtung erreicht werden kann. Damit die Apertur auch im Sinne einer schmalen Hauptabstrahlrichtung genutzt wird, müssen die von dem Abstrahlabschnitt abgestrahlten elektromagnetischen Wellen eine möglichst ebene Phasenfront aufweisen, was üblicherweise nur mit Wellenübergängen erreichbar ist, deren Hülle eine vergleichsweise große Längserstreckung - also Erstreckung in Hauptabstrahlrichtung - aufweist.

Wenn ein solcher Wellenübergang mit einer sich aufweitenden, elektromagnetische Wellen reflektierenden Hülle für die Abstrahlung elektromagnetischer Freiraumwellen geeignet ausgelegt ist, so bedeutet dies nicht, daß dieser Wellenübergang auch zu einer guten Abstrahlcharakteristik führt, wenn an den Abstrahlabschnitt ein weiterer Wellenleiter angeschlossen ist, wie beispielsweise bei der industriellen Radarfüllstandsmessung in Schwallrohren. Genau diese leitungsgeführten Systeme liegen der weiteren Betrachtung zugrunde.

Leitungsgeführte Systeme zur Ermittlung von Tankfüllständen besitzen den Vorteil, daß die Meßsignale - die emittierten und reflektierten elektromagnetischen Wellen - nur in einem geringen Maß von Störreflexionen durch Tankeinbauten betroffen sind, da die elektromagnetischen Wellen durch einen an dem Wellenübergang abstrahlseitig angeschlossenen Wellenleiter direkt zu dem zu detektierenden Füllstand geführt werden.

Die definierten Meßbedingungen leitungsgeführter Systeme erhöhen jedoch nur im speziellen Fall von dispersionsireien Wellenleitern die Meßgenauigkeit und die Robustheit der Füllstandserkennung. Wenn Schwallrohre, die für elektromagnetische Wellen Rundhohlleitungen darstellen, eingesetzt werden, verringert sich die Meßgenauigkeit des Meßsystems auf einen Bruchteil der Meßgenauigkeit von frei abstrahlenden Radarsystemen, wofür die speziellen Hochfrequenzeigenschaften der als Rundhohheitungen wirkenden Schwallrohre verantwortlich sind. In ihnen breiten sich hochfrequente elektromagnetische Wellen stark frequenzabhängig - also dispersiv - aus. Das Gesamtfeld innerhalb einer solchen Hohlleitung setzt sich aus einer Vielzahl von elektromagnetischen Feldmoden zusammen, die die Eigenschaft besitzen, sich unabhängig voneinander mit unterschiedlichen Geschwindigkeiten auszubreiten. Dispersions- und Multimodenausbreitungseffekte sind dann dafür verantwortlich, daß das ausgesendete Meßsignal moden- und füllstandsabhängig verzerrt wird, was unter Verwendung gleicher Radar-Hardware wie im Freiraumfall eine Meßgenauigkeit im Submillimeterbereich unmöglich macht.

Aufgabe der Erfindung ist es daher, einen Wellenübergang bereitzustellen, der eine möglichst modenreine Führung elektromagnetischer Wellen von einem Speiseabschnitt geringen Querschnitts zu einem Abstrahlabschnitt größeren Querschnitts ermöglicht, bei möglichst kurzer Längserstreckung des Wellenübergangs und Abstrahlung elektromagnetischer Wellen mit möglichst ebener Wellenfront.

Die zuvor hergeleitete und beschriebene Aufgabe ist erfindungsgemäß bei einem Wellenübergang der oben angegebenen Art dadurch gelöst, daß in dem durch die Hülle definierten Volumen wenigstens ein metallischer Streukörper vorgesehen ist, der die Wellenfront der von dem Abstrahlabschnitt ausgehenden elektromagnetischen Wellen ebnet.

Es hat sich überraschenderweise herausgestellt, daß ein metallischer Streukörper in dem durch die Hülle definierten Volumen des Wellenübergangs nicht zu den eigentlich zu erwartenden, extrem nachteilig veränderten Feldbildern der elektromagnetischen Wellen mit asymmetrischen, verzerrten Feldverteilungen und großen Anteilen von Mischmoden führt, sondern vielmehr zu einer im wesentlichen monomodigen, im Bereich des Abstrahlabschnitts stark geebneten Ausbreitung elektromagnetischer Wellen führt. "Monomodig" bedeutet hier nicht streng, daß andere als der angeregte Modus nicht vorkommen, es ist vielmehr gemeint, daß ein wesentlicher Anteile der Strahlungsleistung in dem gewünschten Schwingungsmode vorkommt und andere Moden deutlich geringere Leistungsanteile aufweisen. Wenn davon die Rede ist, daß der Streukörper die Wellenfront der von dem Abstrahlabschnitt ausgehenden elektromagnetischen Wellen ebnet, dann ist dies im Vergleich zu demjenigen Feldbild zu sehen, das bei Voraussetzung der gleichen Verhältnisse nur unter Weglassung des Streukörpers entstehen würde.

Wenn von einem metallischen Streukörper die Rede ist, dann ist damit gemeint, daß der Streukörper für die elektromagnetischen Wellen metallisch ist, es kann sich also um einen metallischen Vollkörper, einen metallischen Hohlkörper oder um einen Körper aus einem anderen Material handeln, der lediglich metallisch beschichtet ist

Der erfindungsgemäße Wellenübergang ist gleichermaßen dazu geeignet, elektromagnetische Wellen von seinem Abstxahlabschnitt in den Freiraum abzustrahlen (Antennenanwendung) wie auch in einen weiteren Wellenleiter, wie z. B. ein Schwallrohr.

Bei einer bevorzugten Ausgestaltung der Erfindung ist der Streukörper möglichst zentral in dem Verbindungskanal zwischen dem Speiseabschnitt geringen Querschnitts und dem Abstrahlabschnitt größeren Querschnitts angeordnet, insbesondere nämlich auf wenigstens einer Symmetrieachse und/oder in wenigstens einer Symmetrieebene der Hülle. Mit anderen Worten, der Streukörper ist in Hauptabstrahlrichtung gesehen zentral in einem Querschnitt der Hülle angeordnet.

Von besonderem Vorteil ist es dabei, wenn die von einer fiktiven, im Zentrum des Abstrahlabschnitts angeordneten Projektions-Lichtquelle erzeugte Projektion des Streukörpers auf den Abstrahlabschnitt zwischen 7 % und 25 %, bevorzugt zwischen 10 % und 20 % und ganz bevorzugt zwischen 12 % und 15 % des Gesamt-Querschnitts des Abstrahlabschnitts ausmacht. Durch diese Maßnahme ist gewährleistet, daß der Streukörper einen ausreichend großen Anteil der zentral emittierten elektromagnetischen Wellen abschirmt und dieser Anteil erst durch Wechselwirkung mit der Hülle des Wellenübergangs wieder in Hauptabstrahlrichtung propagiert wird. Dadurch wird der Laufzeitvorteil der aus dem Abstrahlabschnitt schon in Hauptabstrahlrichtung verlaufenden elektromagnetischen Wellen gegenüber den nicht in Hauptabstrahlrichtung emittierten Anteilen der elektromagnetischen Wellen relativiert, wodurch sich eine ebene Wellenfront ergibt.

Es hat sich als besonders vorteilhaft herausgestellt, wenn der Streukörper im Zusammenhang mit der sich in Hauptabstrahlrichtung aufweitenden Hülle näher zu dem Speiseabschnitt angeordnet ist als zu dem Abstrahlabschnitt, der Abstand des Streukörpers von dem Speiseabschnitt insbesondere weniger beträgt als ein Drittel, vorzugsweise weniger als ein Viertel und ganz bevorzugt jedoch mehr als ein Sechstel der Längserstreckung der Hülle, wobei sich die Längserstreckung der Hülle aus dem Abstand des Speiseabschnitts zu dem Abstrahlabschnitt - in Hauptabstrahlrichtung gemessen - ergibt. Dadurch ist gewährleistet, daß die in Hauptabstrahlrichtung aus dem Speiseabschnitt heraustretenden elektromagnetischen Wellen gleich in der Nähe des Speiseabschnitts an dem Streukörper gestreut und reflektiert werden, so daß die Laufzeitunterschiede zu den nicht direkt in Hauptabstrahlrichtung verlaufenden Teilen der elektromagnetischen Wellen ausgleichen werden können.

Dadurch, daß der Streukörper jedenfalls beabstandet zu dem Abstrahlabschnitt und beabstandet zu dem Speiseabschnitt angeordnet ist, ergibt sich insgesamt für den Wellenübergang eine Übertragungsstruktur, bei der auf einen Hohlleiter ein Koaxialübertrager und darauf wieder ein Hohlleiter folgt, wobei der Koaxialleiter ein Zwei-Leitersystem ist, das aus dem Streukörper und der den Streukörper umgebenden Hülle besteht.

Besonders vorteilhaft ist es, wenn sich der Streukörper in Richtung auf den Speiseabschnitt verjüngt und insbesondere in dem verjüngenden, dem Speiseabschnitt zugewandten Bereich eine konvexe oder eine konische Kontur aufweist. Durch diese Ausgestaltung des Streukörpers wird die rückgewandte Reflektion der elektromagnetischen Wellen aus dem Zentralbereich des Wellenübergangs in Richtung auf die Hülle unterstützt und in Richtung auf den Speiseabschnitt vermieden. Die genaue Ausgestaltung des sich verjüngenden, dem Speiseabschnitt zugewandten Bereiches des Streukörpers hängt natürlich auch von der Formgebung der Hülle des Wellenübergangs ab, da beide Elemente die endgültige Wellenausbreitung zusammen beeinflussen. Als Gestaltungsregel für die Kontur des Speiseabschnitts und für die Kontur der Hülle hat sich ergeben, daß im Bereich zwischen dem Speiseabschnitt der Hülle bis zu dem vom Speiseabschnitt entferntesten Punkt des sich verjüngenden, dem Speiseabschnitt zugewandten Bereiches des Streukörpers in Hauptabstrahlrichtung die mittlere Steigung α̅ der Kontur des sich verjüngenden, dem Speiseabschnitt zugewandten Bereichs des Streukörpers kleiner ist als die mittleren Steigung β̅ der Kontur der Hülle. Die "mittlere Steigung" wird für die Hülle und den Streukörper in Hauptabstrahlrichtung separat ermittelt, wobei der Mittelwert über die Längserstreckung der Hülle und über die Längserstrekkung des Streukörpers ermittelt wird.

Es gibt verschiedene Möglichkeiten, wie der Streukörper innerhalb des durch die Hülle definierten Volumens befestigt werden kann, ohne daß die erfindungsgemäß aufgefundene vorteilhafte Wirkung des Streukörpers verloren geht. Als eine vorteilhafte Variante hat sich herausgestellt, daß der Zwischenraum zwischen dem Streukörper und der Hülle im wesentlich vollständig mit einem den Streukörper lagernden Füll-Dielektrikum ausgefüllt ist, insbesondere dann, wenn der Streukörper kugelförmig ausgestaltet ist. Von Bedeutung ist in diesem Fall, daß durch die im wesentlichen vollständige Ausfüllung des durch die Hülle definierten Volumens keine störenden Übergänge innerhalb der Hülle vorhanden sind, die zu einer Brechung der elektromagnetischen Wellen führen könnten. Bei dieser Ausgestaltung bietet es sich an, daß das Dielektrikum im Bereich des Abstrahlabschnitts zu einer die Phasenfront der abgestrahlten elektromagnetischen Welle weiter ebnenden Linse ausgestaltet ist, insbesondere nämlich zu einer in Abstrahlrichtung konvexen dielektrischen Linse. Durch diese Linse wird ein weiterer Freiheitsgrad zur Formung der emittierten elektromagnetischen Wellen bereitgestellt.

In einer alternativen Ausgestaltung der Erfindung ist vorgesehen, daß der Streukörper von einem dielektrischen Tragelement gehalten ist, wobei das dielektrische Tragelement den Zwischenraum zwischen dem Streukörper und der Hülle nur teilweise ausfüllt, nämlich lediglich im Bereich zwischen dem Streukörper und dem Speiseabschnitt der Hülle vorgesehen ist. Als besonders vorteilhaft hat sich dabei herausgestellt, wenn das dielektrische Tragelement sich von dem Speiseabschnitt in Richtung auf den Streukörper hin verjüngt, sich insbesondere konisch verjüngt. Das dielektrische Tragelement wirkt so zunächst als Träger der elektromagnetischen Wellen und führt die elektromagnetischen Wellen gezielt auf den Streukörper, wobei sich mit abnehmendem Querschnitt des konischen Tragelements ein immer größerer Teil der elektromagnetischen Wellen von dem Innenraum des dielektrischen Tragelements in den freien Innenraum der Hülle ablösen. Insgesamt wird jedoch ein großer Teil der elektromagnetischen Wellen an dem Streukörper gestreut und reflektiert. In dieser besonderen Ausgestaltung des nur teilweise den Innenraum der Hülle ausfüllenden dielektrischen Tragelements werden besonders gute Ergebnisse erzielt hinsichtlich der modenreinen Führung der elektromagnetischen Wellen von dem Speiseabschnitt zu dem Abstrahlabschnitt des Wellenübergangs. Dabei hat es sich als besonders vorteilhaft erwiesen, wenn das dielektrische Tragelement den Streukörper nur teilweise umschließt, insbesondere den sich verjüngenden, dem Speiseabschnitt zugewandten Bereich des Streukörpers nur teilweise umschließt, davon insbesondere weniger als 50 %, bevorzugt weniger als 30 %, ganz bevorzugt weniger als 10 % der Oberfläche umschließt. Zu der Oberfläche des sich verjüngenden, dem Speiseabschnitt zugewandten Bereichs des Streukörpers werden dabei nicht gezählt solche Abschnitte des Streukörpers, die sich nicht verjüngen und beispielsweise nur der Befestigung des Streukörpers an dem dielektrischen Tragelement dienen.

Es ist zuvor bereits angedeutet worden, daß die Hülle und der Streukörper des Wellenübergangs aufeinander abgestimmt sein müssen, damit ein besonders gutes Ergebnis bei der Wellenführung erreicht wird. Bei bevorzugten Ausgestaltungen des erfindungsgemäßen Wellenübergangs ist die Hülle - vom Hüllenaußenraum senkrecht zur Hauptabstrahlrichtung und im Schnitt betrachtet - konisch oder konvex geformt, beispielsweise parabolisch oder hyperbolisch, wobei besonders gute Ergebnisse mit parabolischen Konturen der Hülle erzielt worden sind.

Es ist ferner erkannt worden, daß es sich aus fertigungstechnischen Gründen anbietet, die gekrümmte Kontur abschnittsweise konisch auszubilden, womit vergleichbar gute Ergebnisse bei deutlich geringerem Fertigungsaufwand erzielt werden können.

Nach einer weiteren unabhängigen Lehre der Erfindung ist die zuvor aufgezeigte Aufgabe ferner bei einem Hornstrahler - insbesondere einem Hornstrahler zur Beaufschlagung eines Schwallrohres mit elektromagnetischen Wellen - mit einem speisenden Wellenleiter geringen Querschnitts und mit einem an dem Wellenleiter angeschlossenen Wellenübergang, dadurch gelöst, daß der Wellenübergang gemäß der ersten Lehre der Erfindung ausgestaltet ist.

Im einzelnen gibt es noch eine Vielzahl von Möglichkeiten, den erfindungsgemäßen Wellenübergang und den erfindungsgemäßen Hornstrahler auszugestalten und weiterzubilden. Dazu wird verwiesen einerseits auf die den Patentansprüchen 1 und 14 nachgeordneten Patentansprüche, andererseits auf die folgende Beschreibung von Ausführungsbeispielen in Verbindung mit der Zeichnung. In der Zeichnung zeigen
- Fig. 1: einen konventionellen Wellenübergang in Kombination mit einer Hornantenne,
- Fig.2: die elektrische Feldverteilung innerhalb des Wellenübergangs gemäß Fig. 1 bei einer Anregung der Hornantenne mit elektro- magnetischen Wellen bei 9,5 GHz,
- Fig. 3: einen erfindungsgemäßen Wellenübergang zusammen mit einer Hornantenne mit einem metallischen Streukörper,
- Fig. 4: die elektrische Feldverteilung innerhalb des Wellenübergangs gemäß Fig. 3 bei einer Anregung mit elektromagnetischen Wel- len bei 9,5 GHz,
- Fig. 5: die Transmission des Wellenübergangs für elektromagnetische Wellen im E₁₁-Mode über der Frequenz bei den Wellenübergän- gen gemäß den Fig. 1 und 3 und
- Fig. 6: eine Darstellung des Meßfehlers über der Meßentfernung bei Verwendung von Wellenübergängen gemäß den Fig. 1 und 3.

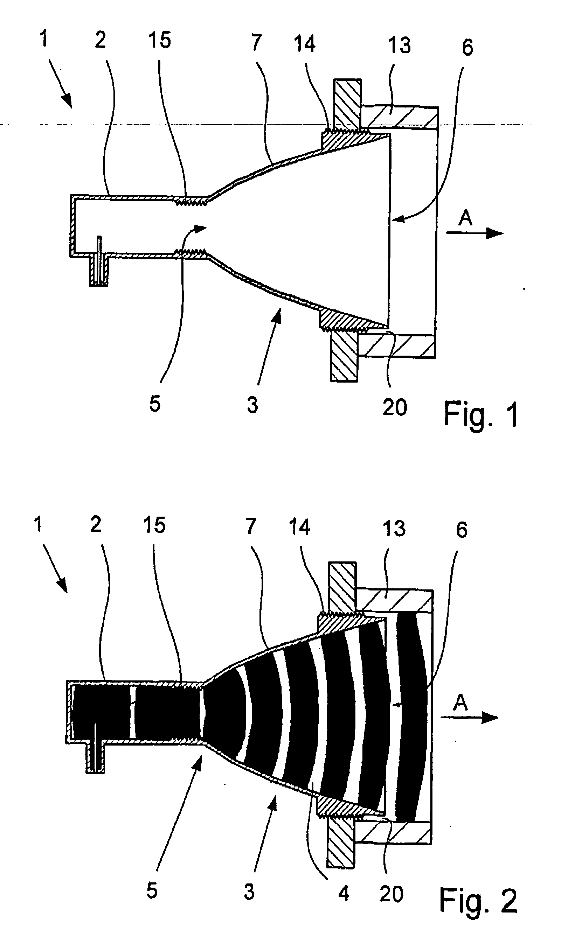

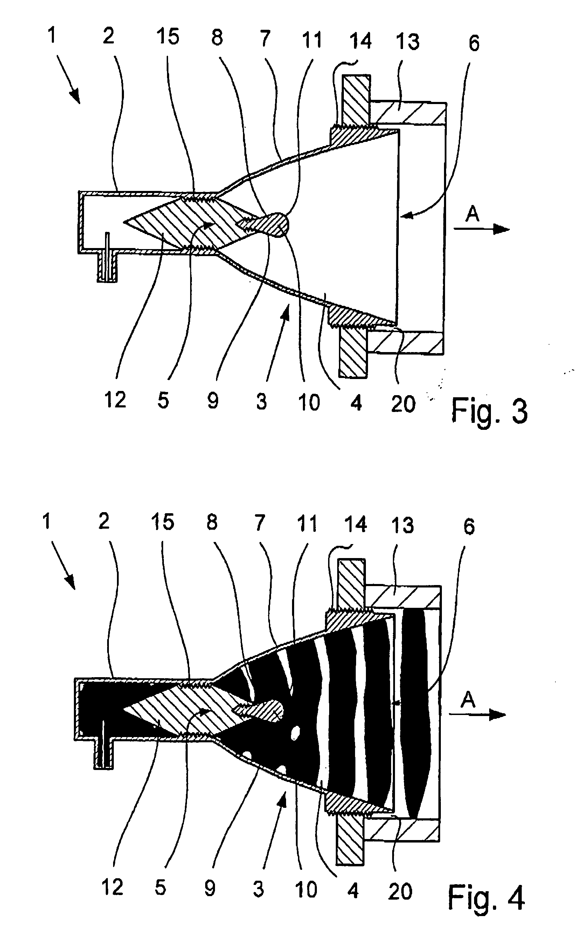

In den Fig. 1 bis 4 sind Querschnitte durch Hornantennen 1 dargestellt, die einen speisenden Wellenleiter 2 und einen daran angeschlossenen Wellenübergang 3 aufweisen. Zunächst ist der Wellenübergang 3 von Interesse. Der Wellenübergang 3 dient zur Führung von elektromagnetischen Wellen 4 - dargestellt in den Fig. 2 und 4 - von einem Speiseabschnitt 5 geringen Querschnitts zu einem Abstrahlabschnitt 6 größeren Querschnitts, wobei der Wellenübergang 3 einen sich von dem Speiseabschnitt 5 auf den Abstrahlabschnitt 6 aufweitenden, die elektromagnetischen Wellen 4 reflektierenden Hülle 7 aufweist. Wie eingangs bereits erläutert worden ist, dient der Wellenübergang 3 dazu, die elektromagnetischen Wellen 4 von dem Speiseabschnitt 5 zu dem Abstrahlabschnitt 6 unter Erweiterung der Apertur möglichst modenrein zu übertragen, so daß die Energie des angeregten Modus - oder der angeregten Moden - in dem angeregten Modus - oder in den angeregten Moden - erhalten bleibt.

In den dargestellten Ausführungsbeispielen ist der speisende Wellenleiter 2 um die Achse der Hauptabstrahlrichtung A rotationssymmetrisch ausgebildet.

In Fig. 2 ist die elektrische Feldverteilung des erregten elektromagnetischen Feldes 4 dargestellt, wobei zur Verdeutlichung der sich ausbildenden Wellenfront lediglich eine zweiwertige "Farb"-Kodierung gewählt worden ist, wobei die schwarzen Bereiche das Überschreiten eines bestimmten Feldstärkenwertes und die weißen Bereiche das Unterschreiten eines bestimmten Feldstärken-Werte anzeigen. In Fig. 2 ist jedenfalls zu erkennen, daß mit einem konventionellen Wellenübergang 3 im gesamten Bereich des durch die Hülle 7 definierten Volumen des Wellenübergangs 3 und damit auch im Bereich des Abstrahlabschnitts 6 und auch darüber hinaus elektromagnetische Wellen 4 mit einer gekrümmten Wellenform resultieren, was aus den eingangs genannten Gründen unerwünscht ist.

Bei dem in Fig. 3 dargestellten Wellenübergang 3 ist in dem durch die Hülle 7 definierten Volumen ein metallischer Streukörper 8 vorgesehen, der die Wellenfront der von dem Abstrahlabschnitt 6 ausgehenden elektromagnetischen Wellen 4 ebnet, wobei die Feldebnung auch schon innerhalb des durch die Hülle 7 definierten Volumens vorliegt, was in Fig. 4 erkennbar ist. Dieses Ergebnis ist insoweit überraschend, als daß eigentlich zu erwarten ist, daß ein in den zentralen Ausbreitungsbereich eingebrachter metallischer Streukörper 8 zur Ausbildung eines beispielsweise durch angeregte Modenkonversion unerwünschten elektromagnetischen Feldes führt, was tatsächlich jedoch bei der dargestellten Ausgestaltung des Wellenübergangs 3 nicht der Fall ist, wie Fig. 4 verdeutlicht.

Bei dem Ausbildungsbeispiel gemäß Fig. 3 ist der Streukörper 8 auf der Symmetrieachse der Hülle 7 angeordnet, die diese aufweist, da sie rotationssymmetrisch ausgebildet ist. Ferner ist der Streukörper 8 in Hauptabstrahlrichtung A gesehen zentral in einem Querschnitt der Hülle 7 angeordnet. Durch diese Anordnung wird erreicht, daß die in Hauptabstrahlrichtung A gesehen vordersten Anteile der sich ausbreitenden Wellenfront der sich ausbreitenden elektromagnetischen Welle 4 gestreut werden und die gestreuten Anteile nach Wechselwirkung mit der Hülle 7 oder durch Verstärkung der nicht unmittelbar in Hauptabstrahlrichtung A aus dem Speiseabschnitt 5 tretenden Anteile der elektromagnetischen Wellen "verzögert" zu dem Wellenbild beitragen, wodurch eine Ebnung der aus dem Wellenübergang 3 durch den Abstrahlabschnitt 6 austretenden elektromagnetischen Wellen 4 erfolgt.

Der Streukörper 8 ist so in dem durch die Hülle 7 definierten Volumen angeordnet und hat senkrecht zur Hauptabstrahlrichtung A eine solche Ausdehnung, daß die von einer fiktiven, im Zentrum des Abstrahlabschnitts 6 angeordnete Projektions-Lichtquelle erzeugte Projektion des Streukörpers 8 auf den Abstrahlabschnitt 6 etwa 14 % des Gesamt-Querschnitts des Abstrahlabschnitts ausmacht.

Es ist von Vorteil, wenn der Streukörper - wie in den Fig. 3 und 4 dargestellt - näher zu dem Speiseabschnitt 5 angeordnet ist als zu dem Abstrahlabschnitt 6, wobei im vorliegenden Fall der Abstand des Streukörpers 8 von dem Speiseabschnitt 5 etwa ein Drittel der Längserstreckung der Hülle 7 in Hauptabstrahlrichtung A ausmacht, wobei hier die Lage des Schwerpunktes des Streukörpers 8 maßgeblich ist.

Wie in den Fig. 3 und 4 ferner zu erkennen ist, verjüngt sich der Streukörper 8 in Richtung auf den Speiseabschnitt 5, wobei der sich verjüngende, dem Speiseabschnitt 5 zugewandte Bereich 9 des Streukörpers 8 eine konische Kontur aufweist. Eine solche konische Kontur des dem Speiseabschnitt 5 zugewandten Bereichs 9 des Streukörpers 8 hat sich insbesondere als vorteilhaft erwiesen im Zusammenhang mit der parabolisch ausgestalteten Hülle 7 des Wellenübergangs 3.

Der in den Fig. 3 und 4 dargestellte Wellenübergang 3 zeichnet sich insbesondere dadurch aus, daß im Bereich zwischen dem Speiseabschnitt 5 der Hülle 7 bis zu dem vom Speiseabschnitt 5 entferntesten Punkt 10 des sich verjüngenden, dem Speiseabscbnitt 5 zugewandten Bereiches 9 des Streukörpers 8 in Hauptabstrahlrichtung A die mittlere Steigung α̅ der Kontur des sich verjüngenden, dem Speiseabschnitt 5 zugewandten Bereichs 9 des Streukörpers 8 kleiner ist als die mittlere Steigung β̅ der Kontur der Hülle 7. Dabei ist zu berücksichtigen, daß bei der Ermittlung der mittleren Steigungen α̅ und β̅ jeweils die Längserstreckungen der Hülle 7 bzw. des sich verjüngenden, dem Speiseabschnitt 5 zugewandten Bereichs 9 des Streukörpers 8 herangezogen werden; d.h. zu der Ermittlung der mittleren Steigung α̅ der Kontur des sich verjüngenden, dem Speiseabschnitt 5 zugewandten Bereichs 9 des Streukörpers 8 wird nicht der Bereich des Streukörpers 8 berücksichtigt, der hier nur zum Einschrauben des Streukörpers 8 dient. Im vorliegenden Fall liegt die mittlere Steigung α̅ der Kontur des sich verjüngenden, dem Speiseabschnitt 5 zugewandten Bereichs 9 bei etwa 17° und die mittlere Steigung β̅ der Hülle 7 bei etwa 28°.

Wie in Fig. 3 zu erkennen ist, wird der Streukörper 8 von einem dielektrischen Tragelement 12 gehalten, wobei das dielektrische Tragelement 12 den Zwischenraum zwischen dem Streukörper 8 und der Hülle 7 nur zu einem Teil ausfüllt, da das dielektrische Tragelement 12 nur im Bereich zwischen dem Streukörper 8 und dem Speiseabschnitt 5 der Hülle 7 vorgesehen ist. Dazu kommt, daß das dielektrische Trageelement 12 sich von dem Speiseabschnitt 5 in Richtung auf den Streukörper 8 verjüngt, sich vorliegend nämlich konisch verjüngt. Das dielektrische Tragelement 12 und der auf den Speiseabschnitt 5 konisch zulaufende Bereich 9 des Streukörpers 8 bilden hier also zwei gegenläufige sich zuspitzende Konstruktionselemente, die miteinander verbunden sind. In Kombination mit dem Streukörper 8 hat das gemäß Fig. 3 ausgebildete dielektrische Tragelement 12 eine sehr vorteilhafte Wirkung auf die Ausbildung der elektromagnetischen Wellen 4 in dem Wellenübergang 3 entgegen der eigentlichen Erwartung der Wirkung eines solchen dielektrischen Körpers, der üblicherweise - ohne Vorhandensein eines Streukörpers 8 - zu einem unerwünschten Feldbild führen würde.

Durch das konisch auf den Streukörper 8 zulaufende dielektrische Tragelement 12 wird ein Großteil der aus dem Wellenleiter 2 stammenden elektromagnetischen Wellen 4 auf den Streukörper 8 zugeleitet, wobei mit abnehmendem Querschnitt des dielektrischen Trageelements 12 ein immer größerer Anteil der in dem dielektrischen Trageelement 12 ursprünglich geführten elektromagnetischen Wellen 4 in den Außenraum des dielektrischen Tragelements 12 und in den Innenraum der Hülle 7 tritt. Derart kann ein großer Teil der elektromagnetischen Wellen 4 mit dem Streukörper 8 und der Hülle 7 wechselwirken, so daß eine besonders ebene Wellenfront entsteht, wie anhand Fig. 4 dokumentiert ist. Das vorteilhafte Zusammenspiel von konisch zulaufendem dielektrischem Tragelement 12, sich konisch verjüngendem Streukörper 8 und der sich in Hauptabstrahlrichtung A aufweitenden Hülle 7 ist in der Form unerwartet und widerspricht den Erfahrungen mit einzelnen solcher in einem Wellenübergang 3 vorgesehenen Elementen.

Es hat sich als besonders vorteilhaft herausgestellt, wenn das dielektrische Tragelement 12 den Streukörper 8 wie in Fig.3 dargestellt - nur teilweise umschließt, nämlich den sich verjüngenden, dem Speiseabschnitt 5 zugewandten Bereich 9 des Streukörpers 8 nur teilweise umschließt. In dem Ausführungsbeispiel gemäß Fig. 3 umschließt das dielektrische Tragelement 12 den Bereich 9 des Streukörpers 8 zu weniger als 20 %. Die Schraubverbindung zwischen dem Streukörper 8 und dem dielektrischen Tragelement 12 hat sich in der Praxis als besonders zuverlässig herausgestellt.

Die Hülle 7 ist - vom Hüllenaußenraum und senkrecht zur Hauptabstrahlrichtung A und im Schnitt betrachtet - abschnittsweise konisch ausgebildet, wobei die konischen Abschnitte insgesamt eine parabolische Kontur nachbilden. Dadurch ist die Hülle 7 maschinell besonders einfach und kostengünstig zu fertigen bei kaum eingeschränktem Übertragungsverhalten gegenüber einem kontinuierlichen Paraboloiden.

Insgesamt ist der in den Fig. 3 und 4 dargestellte Hornstrahler 1 zur Beaufschlagung eines Schwallrohres 13 mit elektromagnetischen Wellen 4 gedacht, wobei sich herausgestellt hat, daß die von dem dargestellten Wellenübergang 3 bereitgestellten elektromagnetischen Wellen 4 mit ebenen Wellenfronten auch beim Übergang von dem Wellenübergang 3 auf das zylindrische Schwallrohr 13 modenrein erhalten bleiben.

Bemerkenswert ist bei dem Ausführungsbeispiel gemäß Fig. 3, daß die Längserstreckung des Wellenübergangs 3 in etwa dem Durchmesser des Abstrahlabschnitts 6 entspricht, die Hornantenne ist also ausgesprochen kurzbauend.

Die Hüllen 7 der Wellenübergänge 3 sind im Bereich des Abstrahlabschnitts 6 mit einem Außengewinde 14 versehen, mit dem der Hornstrahler 1 in dem Schwallrohr 13 befestigbar und positionierbar ist. Dies ist vorteilhaft, weil der Durchmesser zwischen dem Schwallrohr 13 und dem Wellenübergang 3 meist einen Sprung aufweist, welcher die Reinheit der durch den Wellenübergang 3 angeregten Modenverteilung negativ beeinflussen kann. Die variable Eindringtiefe des Wellenübergangs 3 in das Schwallrohr 13 wird dazu genutzt, über die Länge des zwischen der Außenseite des Wellenübergangs 3 und der Schwallrohrinnenseite entstehenden Luftspalts 20 die Modenanpassung zusätzlich zu verbessern.

Darüber hinaus erstreckt sich das dielektrische Tragelement 12 in den speisenden Wellenleiter 2, wobei das dielektrische Tragelement 12 über ein Gewinde 15 in dem speisenden Wellenleiter 2 befestigbar und ebenfalls positionierbar ist.

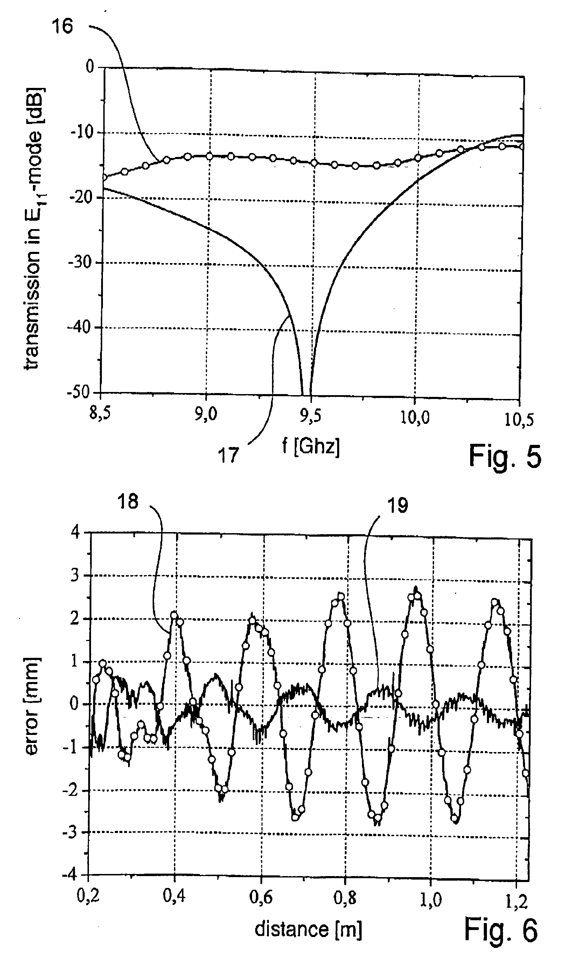

In Fig. 5 ist dargestellt der Betrag des Streuparameters S_{2(E11), 1(H11)} im Frequenzbereich von 8,5 GHz bis 10,5 GHz für die Wellenübergänge gemäß den Fig. 1 und 3, wobei die Wellenübergänge gemäß den Fig. 1 und 3 für eine Frequenz von etwa 9,5 GHz optimiert worden sind.

Der Kurvenverlauf 16 in Fig. 5 zeigt die Transmission im E₁₁-Mode mit einem Wellenübergang, wie er in Fig. 1 dargestellt ist, also ohne Streukörper. Der Kurvenverlauf 17 in Fig. 5 hingegen zeigt den Verlauf der Transmission von E₁₁-Moden im Frequenzbereich von 8,5 GHz bis 10,5 GHz, diesmal jedoch erzielt mit dem Wellenübergang gemäß Fig. 3. Dem Kurvenverlauf 17 gemäß Fig. 5 kann einer Kerbfilter-Bandbreite von etwa 1 GHz entnommen werden bei einer angenommenen Dämpfung des E₁₁-Modus von 20 dB. Es kann gezeigt werden, daß Moden höherer Ordnung in ähnlicher Weise und sogar mit weit mehr als 20 dB gedämpft werden.

Fig. 6 zeigt zwei Kurvenverläufe, die den Meßfehler ("error") über die gemessene Entfernung darstellen. Fig. 18 zeigt den Meßfehler bei einem Wellenübergang ohne Streukörper und Fig. 19 zeigt die korrespondierende Kurve bei Verwendung eines metallischen Streukörpers. Es ist deutlich zu erkennen, daß der maximale Meßfehler sich bei dem modenangepaßten Wellenübergang mit Streukörper gegenüber dem einer parabolischen Hornantenne ohne Streukörper - gemäß Fig. 1 - auf ein Bruchteil reduziert, vorliegend nämlich nur etwa ein Fünftel des Fehlers beträgt, der mit einem Wellenübergang ohne Streukörper erzielt wird.

## Patentansprüche

1. Wellenübergang, insbesondere für Radaranwendungcn, zur Führung von elektromagnetischen Wellen (4) von einem Speiseabschnitt (5) geringen Querschnitts zu einem Abstrahlabschnitt (6) größeren Querschnitts, mit einer sich von dem Speiseabschnitt (5) auf den Abstrahlabschnitt (6) aufweitenden, die elektromagnetischen Wellen (4) reflektierenden Hülle (7),
**dadurch gekennzeichnet,**
**daß** in dem durch die Hülle (7) definierten Volumen wenigstens ein metallischer Streukörper (8) vorgesehen ist, der die Wellenfront der von dem Abstrahlabschnitt (6) ausgehenden elektromagnetischen Wellen (4) ebnet.

2. Wellenübergang nach Anspruch 1, **dadurch gekennzeichnet, daß** der Streukörper (8) auf wenigstens einer Symmetrieachse und/oder in wenigstens einer Symmetrieebene der Hülle (7) angeordnet ist, insbesondere in Hauptabstrahlrichtung (A) gesehen zentral in einem Querschnitt der Hülle (7) angeordnet ist.

3. Wellenübergang nach Anspruch 1 oder 2, **dadurch gekennzeichnet, daß** der Streukörper (8) näher zu dem Speiseabschnitt (5) angeordnet ist als zu dem Abstrahlabschnitt (6), der Abstand des Streukörpers (8) von dem Speiseabschnitt (5) insbesondere weniger beträgt als ein Drittel, vorzugsweise weniger als ein Viertel, ganz bevorzugt jedoch mehr als ein Sechstel der Längserstreckung der Hülle (7).

4. Wellenübergang nach einem der Ansprüche 1 bis 3, **dadurch gekennzeichnet, daß** sich der Streukörper (8) in Richtung auf den Speiseabschnitt (5) verjüngt, insbesondere in dem sich verjüngenden, dem Speiseabschnitt (5) zugewandten Bereich (9) eine konvexe oder eine konische Kontur aufweist.

5. Wellenübergang nach Anspruch 4, **dadurch gekennzeichnet, daß** im Bereich zwischen dem Speiseabschnitt (5) der Hülle (7) bis zu dem vom Speiseabschnitt (5) entferntesten Punkt (10) des sich verjüngenden, dem Speiseabschnitt (5) zugewandten Bereiches (9) des Streukörpers (8) in Hauptabstrahlrichtung (A) die mittlere Steigung α̅ der Kontur des sich verjüngenden, dem Speiseabschnitt (5) zugewandten Bereichs (9) des Streukörpers (8) kleiner ist als die mittleren Steigung β̅ der Kontur der Hülle.

6. Wellenübergang nach einem der Ansprüche 1 bis 5, **dadurch gekennzeichnet, daß** sich der Streukörper (8) in Richtung auf den Abstrahlabschnitt (6) verjüngt, insbesondere in dem sich verjüngenden, dem Abstrahlabschnitt (6) zugewandten Bereich (11) eine konvexe, insbesondere sphärische Kontur aufweist.

7. Wellenübergang nach einem der Ansprüche 1 bis 6, **dadurch gekennzeichnet, daß** der Zwischenraum zwischen dem Streukörper (8) und der Hülle (7) im wesentlichen vollständig mit einem den Streukörper (8) lagernden Füll-Dielektrikum ausgefüllt ist, vorzugsweise im Fall eines kugelförmigen Streukörpers.

8. Wellenübergang nach Anspruch 7, **dadurch gekennzeichnet, daß** das Dielektrikum im Bereich des Abstrahlabschnitts (6) zu einer die Phasenfront der abgestrahlten elektromagnetischen Wellen (4) weiter ebnenden Linse ausgestaltet ist, insbesondere zu einer in Abstrahlrichtung (A) konvexen dielektrischen Linse.

9. Wellenübergang nach einem der Ansprüche 1 bis 6, **dadurch gekennzeichnet, daß** der Streukörper (8) von einem dielektrischen Tragelement (12) gehalten ist, wobei das dielektrische Tragelement (12) den Zwischenraum zwischen dem Streukörper (8) und der Hülle (7) nur teilweise ausfüllt, vorzugsweise zu einem nur geringen Teil ausfüllt, und das dielektrische Tragelement (12) im Bereich zwischen dem Streukörper (8) und dem Speiseabschnitt (5) der Hülle (7) vorgesehen ist.

10. Wellenübergang nach Anspruch 9, **dadurch gekennzeichnet, daß** das dielektrische Tragelement (12) den Streukörper (8) nur teilweise umschließt, insbesondere den sich verjüngenden, dem Speiseabschnitt (5) zugewandten Bereich (9) des Streukörpers (8) nur teilweise umschließt, davon insbesondere weniger als 50 %, bevorzugt weniger als 30 %, ganz bevorzugt weniger als 10 % der Oberfläche umschließt.

11. Wellenübergang nach Anspruch 9, **dadurch gekennzeichnet, daß** das dielektrische Tragelement (12) sich von dem Speiseabschnitt (5) in Richtung auf den Streukörper (8) verjüngt, insbesondere sich konisch verjüngt.

12. Wellenübergang nach Anspruch 9 bis 11, **dadurch gekennzeichnet, daß** der Streukörper (8) in das dielektrische Tragelement (12) eingeschraubt oder eingeklemmt ist.

13. Wellenübergang nach einem der Ansprüche 1 bis 2, **dadurch gekennzeichnet, daß** die Hülle (7) vom Hüllenaußenraum und senkrecht zur Hauptabstrahlrichtung (A) und im Schnitt betrachtet konisch oder konvex geformt ist, insbesondere parabolisch oder hyperbolisch, insbesondere wobei die Hülle (7) abschnittsweise konisch ausgebildet ist.

14. Hornstrahler (1), insbesondere zur Beaufschlagung eines Schwallrohres (13) mit elektromagnetischen Wellen (4), mit einem speisenden Wellenleiter (2) geringen Querschnitts und mit einem an den Wellenleiter (2) angeschlossenen Wellenübergang (3) zur Führung der von dem speisenden Wellenleiter (2) stammenden elektromagnetischen Wellen (4) von einem Speiseabschnitt (5) geringen Querschnitts des Wellenübergangs (3) zu einem Abstrahlabschnitt (6) größeren Querschnitts des Wellenübergangs (3), wobei der Wellenübergang (3) eine sich von dem Speiseabschnitt (5) auf den Abstrahlabschnitt (6) aufweitende, die elektromagnetischen Wellen (4) reflektierende Hülle (7) aufweist,
**dadurch gekennzeichnet,**
**daß** der Wellenübergang (3) nach einem der Ansprüche 1 bis 13 ausgestaltet ist.

15. Hornstrahler nach Anspruch 14, **dadurch gekennzeichnet, daß** die Hülle (7) im Bereich des Abstrahlabschnitts (6) ein Außengewinde (14) aufweist, mit dem der Hornstrahler in dem Schwallrohr (13) befestigbar und positionierbar ist.

16. Hornstrahler nach Anspruch 14 oder 15, **dadurch gekennzeichnet, daß** sich das Füll-Dielektrikum oder sich das dielektrische Tragelement (12) in den speisenden Wellenleiter (2) erstreckt, insbesondere über ein Gewinde (15) in dem speisenden Wellenleiter (2) befestigbar und positionierbar ist.

## Claims

1. Waveguide, in particular for radar applications, for guiding electromagnetic waves (4) from a feed section (5) with a small cross section to an emission section (6) with a larger cross section, having a casing (7) which widens from the feed section (5) to the emission section (6) and reflects the electromagnetic waves (4),
**characterized**
**in that** at least one metallic scattering body (8) which flattens the wavefront of the electromagnetic waves (4) emerging from the emission section (6) is provided in the volume defined by the casing (7).

2. Waveguide according to Claim 1, **characterized in that** the scattering body (8) is arranged on at least one axis of symmetry and/or on at least one plane of symmetry of the casing (7), in particular being arranged centrally in a cross section of the casing (7) when seen in the main emission direction (A).

3. Waveguide according to Claim 1 or 2, **characterized in that** the scattering body (8) is arranged closer to the feed section (5) than to the emission section (6), the distance between the scattering body (8) and the feed section (5) is, in particular, less than one third, and preferably less than one quarter, but very particularly preferably more than one sixth of the longitudinal extent of the casing (7).

4. Waveguide according to one of Claims 1 to 3, **characterized in that** the scattering body (8) tapers in the direction of the feed section (5), in particular having a convex or a conical contour in the tapering area (9) which faces the feed section (5).

5. Waveguide according to Claim 4, **characterized in that** the mean gradient α̅ of the contour of the tapering area (9) of the scattering body (8) facing the feed section (5) is less than the mean gradient β̅ of the contour of the casing in the area between the feed section (5) of the casing (7) in the main emission direction (A) up to that point (10) which is furthest away from the feed section (5) in the tapering area (9) of the scattering body (8) facing the feed section (5).

6. Waveguide according to one of Claims 1 to 5, **characterized in that** the scattering body (8) tapers in the direction of the emission section (6), in particular having a convex, in particular spherical, contour in the tapering area (11) facing the emission section (6).

7. Waveguide according to one of Claims 1 to 6, **characterized in that** the intermediate space between the scattering body (8) and the casing (7) is essentially completely filled with a filling dielectric which supports the scattering body (8), preferably in the case of a spherical scattering body.

8. Waveguide according to Claim 7, **characterized in that**, in the area of the emission section (6), the dielectric is configured to form a lens which further flattens the phase front of the emitted electromagnetic waves (4), in particular to form a dielectric lens which is convex in the emission direction (A).

9. Waveguide according to one of Claims 1 to 6, **characterized in that** the scattering body (8) is held by a dielectric supporting element (12), wherein the dielectric supporting element (12) only partially fills the intermediate space between the scattering body (8) and the casing (7), preferably filling only a small portion of it, and the dielectric supporting element (12) is provided in the area between the scattering body (8) and the feed section (5) of the casing (7).

10. Waveguide according to Claim 9, **characterized in that** the dielectric supporting element (12) only partially surrounds the scattering body (8), in particular only partially surrounding the tapering area (9) of the scattering body (8) facing the feed section (5), in particular surrounding less than 50% thereof of the surface, preferably less than 30% thereof and very particularly preferably less than 10% thereof.

11. Waveguide according to Claim 9, **characterized in that** the dielectric supporting element (12) tapers, in particular tapers conically, from the feed section (5) in the direction of the scattering body (8).

12. Waveguide according to Claims 9 to 11, **characterized in that** the scattering body (8) is screwed or clamped into the dielectric supporting element (12).

13. Waveguide according to one of Claims 1 or 2, **characterized in that** the casing (7) has a conical or convex shape from the casing outer area and at right angles to the main emission direction (A) and considered in section, in particular a parabolic or hyperbolic shape, in particular with the casing (7) being conical in places.

14. Horn antenna element (1), in particular for applying electromagnetic waves (4) to a stilling well (13), having a feeding waveguide (2) with a small cross section and having a waveguide (3) which is connected to the waveguide (2), in order to guide the electromagnetic waves (4) which originate from the feeding waveguide (2) from a feed section (5) with a small cross section of the waveguide (3) to an emission section (6) with a larger cross section of the waveguide (3), wherein the waveguide (3) has a casing (7) which widens from the feed section (5) to the emission section (6) and reflects the electromagnetic waves (4),
**characterized**
**in that** the waveguide (3) is designed according to one of Claims 1 to 13.

15. Horn antenna element according to Claim 14, **characterized in that** the casing (7) has an external thread (14) in the area of the emission section (6), by means of which external thread (14) the horn antenna element can be mounted and positioned in the stilling well (13).

16. Horn antenna element according to Claim 14 or 15, **characterized in that** the filling dielectric or the dielectric supporting element (12) extends into the feeding waveguide (2), and in particular can be mounted and positioned in the feeding waveguide (2) via a thread (15).

## Revendications

1. Élément de transition d'ondes, notamment pour les applications radar, pour guider des ondes électromagnétiques (4) d'une portion d'alimentation (5) ayant une faible section transversale vers une portion de rayonnement (6) ayant une section transversale plus grande, comprenant une enveloppe (7) qui s'élargit de la portion d'alimentation (5) à la portion de rayonnement (6) et qui réfléchit les ondes électromagnétiques (4),
**caractérisé en ce**
**qu'**au moins un diffuseur métallique (8) est prévu dans le volume défini par l'enveloppe (7), lequel aplanit le front d'onde des ondes électromagnétiques (4) qui sortent de la portion de rayonnement (6).

2. Élément de transition d'ondes selon la revendication 1, **caractérisé en ce que** le diffuseur (8) est disposé sur au moins un axe de symétrie et/ou dans au moins un plan de symétrie de l'enveloppe (7), notamment disposé au centre dans une section transversale de l'enveloppe (7) en l'observant dans le sens du rayonnement principal (A).

3. Élément de transition d'ondes selon la revendication 1 ou 2, **caractérisé en ce que** le diffuseur (8) est disposé plus proche de la portion d'alimentation (5) que de la portion de rayonnement (6), l'écart entre le diffuseur (8) et la portion d'alimentation (5) est notamment inférieur à un tiers, de préférence inférieur à un quart et avec une nette préférence tout de même supérieur à un sixième de la projection longitudinale de l'enveloppe (7).

4. Élément de transition d'ondes selon l'une des revendications 1 à 3, **caractérisé en ce que** le diffuseur (8) se rétrécit en direction de la portion d'alimentation (5) et présente un profil convexe ou conique, notamment dans la zone (9) qui rétrécit et qui fait face à la portion d'alimentation (5).

5. Élément de transition d'ondes selon la revendication 4, **caractérisé en ce que** dans la zone entre la portion d'alimentation (5) de l'enveloppe (7) jusqu'au point (10) le plus éloigné de la portion d'alimentation (5) de la zone (9) du diffuseur (8) qui rétrécit et qui fait face à la portion d'alimentation (5), dans le sens du rayonnement principal (A), la pente moyenne α du profil de la zone (9) du diffuseur (8) qui rétrécit et qui fait face à la portion d'alimentation (5) est inférieure à la pente β du profil de l'enveloppe.

6. Élément de transition d'ondes selon l'une des revendications 1 à 5, **caractérisé en ce que** le diffuseur (8) se rétrécit en direction de la portion de rayonnement (6) et présente un profil convexe, notamment sphérique dans la zone (11) qui rétrécit et qui fait face à la portion de rayonnement (6).

7. Élément de transition d'ondes selon l'une des revendications 1 à 6, **caractérisé en ce que** l'espace intermédiaire entre le diffuseur (8) et l'enveloppe (7) est pour l'essentiel entièrement rempli d'un diélectrique de remplissage servant de logement au diffuseur (8), de préférence dans le cas d'un diffuseur de forme sphérique.

8. Élément de transition d'ondes selon la revendication 7, **caractérisé en ce que** dans la zone de la portion de rayonnement (6), le diélectrique est configuré en une lentille qui aplanit encore plus le front de phase des ondes électromagnétiques (4) rayonnées, notamment en une lentille diélectrique convexe dans le sens du rayonnement (A).

9. Élément de transition d'ondes selon l'une des revendications 1 à 6, **caractérisé en ce que** le diffuseur (8) est maintenu par un élément porteur diélectrique (12), l'élément porteur diélectrique (12) ne remplissant que partiellement l'espace intermédiaire entre le diffuseur (8) et l'enveloppe (7), ne le remplissant de préférence que dans une faible proportion, et l'élément porteur diélectrique (12) est prévu dans la zone entre le diffuseur (8) et la portion d'alimentation (5) de l'enveloppe (7).

10. Élément de transition d'ondes selon la revendication 9, **caractérisé en ce que** l'élément porteur diélectrique (12) n'entoure que partiellement le diffuseur (8), n'entoure notamment que partiellement la zone (9) du diffuseur (8) qui rétrécit et qui fait face à la portion d'alimentation (5), en entourant notamment moins de 50 %, de préférence moins de 30 % et avec une nette préférence moins de 10 % de la surface.

11. Élément de transition d'ondes selon la revendication 9, **caractérisé en ce que** l'élément porteur diélectrique (12) rétrécit de la portion d'alimentation (5) en direction du diffuseur (8), se rétrécit notamment de manière conique.

12. Élément de transition d'ondes selon l'une des revendications 9 à 11, **caractérisé en ce que** le diffuseur (8) est vissé ou coincé dans l'élément porteur diélectrique (12).

13. Élément de transition d'ondes selon l'une des revendications 1 à 2, **caractérisé en ce que** l'enveloppe (7), vue depuis l'espace extérieur de l'enveloppe et perpendiculairement au sens du rayonnement principal (A), est de forme conique ou convexe, notamment parabolique ou hyperbolique, l'enveloppe (7) ayant notamment une configuration conique dans certaines portions.

14. Antenne à cornet (1), notamment pour exposer un tube de projection (13) à des ondes électromagnétiques (4), comprenant un guide d'onde d'alimentation (2) de faible section transversale et comprenant un élément de transition d'onde (3) raccordé au guide d'onde (2) pour guider les ondes électromagnétiques (4) qui émanent du guide d'onde d'alimentation (2) d'une portion d'alimentation (5) ayant une faible section transversale vers une portion de rayonnement (6) ayant une section transversale plus grande de l'élément de transition d'onde (3), l'élément de transition d'onde (3) présentant une enveloppe (7) qui s'élargit de la portion d'alimentation (5) à la portion de rayonnement (6) et qui réfléchit les ondes électromagnétiques (4),
**caractérisée en ce**
**que** l'élément de transition d'onde (3) est configuré selon l'une des revendications 1 à 13.

15. Antenne à cornet selon la revendication 14, **caractérisée en ce que** l'enveloppe (7) présente dans la zone de la portion de rayonnement (6) un filetage (14) qui permet de fixer et de positionner l'antenne à cornet dans le tube de projection (13).

16. Antenne à cornet selon la revendication 14 ou 15, **caractérisée en ce que** le diélectrique de remplissage ou l'élément porteur diélectrique (12) s'étend dans le guide d'onde d'alimentation (2) et peut notamment être fixé et positionné dans le guide d'onde d'alimentation (2) par le biais d'un filet (15).
